(19) Europäisches Patentamt
European Patent Office
Office européen des brevets

(11) **EP 4 471 590 A1**

(12) **EUROPEAN PATENT APPLICATION**

(43) Date of publication:
**04.12.2024 Bulletin 2024/49**

(21) Application number: 23175948.1

(22) Date of filing: **30.05.2023**

(51) International Patent Classification (IPC):
**G06F 9/50** (2006.01)     **G06F 9/48** (2006.01)

(52) Cooperative Patent Classification (CPC):
**G06F 9/5027; G06F 9/4887;** G06F 12/02;
G06F 2209/483; G06F 2209/5022; G06F 2209/504;
G06F 2209/508; G06F 2212/1008; G06F 2212/1024

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Rockwell Collins, Inc.**
**Cedar Rapids, IA 52498 (US)**

(72) Inventors:
• **SALINAS HERNANDO, Gonzalo**
  **Cork T12 X2TN (IE)**
• **DE LA CRUZ MARTÍNEZ, Raúl**
  **Cork T12 RKH6 (IE)**
• **GARCIA GENER, Alejandro**
  **Cork T12 FA49 (IE)**

(74) Representative: **Dehns**
**10 Old Bailey**
**London EC4M 7NG (GB)**

(54) **METHOD AND SYSTEM FOR MANAGING SOFTWARE APPLICATIONS**

(57)     A method for managing software application tasks being performed in a multi-core processing system, the system comprising: a management core configured to manage the allocation of processing tasks in the system; a plurality of processing cores configured to execute instructions for performing processing tasks; at least one shared resource, wherein the at least one shared resource is connected to each of the processing cores; a contention assessment module configured to monitor the amount of contention in the system; and a processing suspension module configured to cause the suspension of processing on at least one of the processing cores; wherein the method comprises: determining a criticality level of each task to be performed; allocating each task to a respective processing core of the plurality of processing cores based on the determined criticality level; assigning a contention threshold to at least one processing core of the plurality of processing cores; monitoring the amount of contention caused by the at least one processing core that has been assigned a contention threshold; and if the amount of contention caused by the at least one processing core that has been assigned a contention threshold reaches the assigned contention threshold, suspending processing on that processing core.

Figure 1

EP 4 471 590 A1

**Description**

TECHNICAL FIELD

The present disclosure relates generally to methods and systems for managing software applications and, in particular, to methods and systems for managing software applications of different criticalities in real-time systems.

BACKGROUND

The computing architectures used in safety-critical systems are becoming more complex. Some of them already include several homogeneous and heterogeneous cores, specialized accelerators, complex interconnects and dedicated input/output peripherals.

More complex system comes at the price of harder predictability and determinism. Specifically, in multicore systems, there are plenty of shared resources that can create what are known as "interference channels". These are common hardware components among two or more cores that can create contention scenarios. A contention scenario occurs when two or more primaries try to access a shared resource that has a single access channel. This single access channel is also known as interference channel.

The well-known ARINC-653 standard has become the de-facto scheduling scheme to enforce determinism on multi-core systems by imposing pre-defined static resource and time partitions allocations. This type of scheduling is widely used in avionics and other aerospace systems.

The inventors have realised that there is a need for an improved method and system for managing mixed-criticality applications.

SUMMARY

A first aspect of the present disclosure relates to a method for managing software application tasks being performed in a multi-core processing system, the system comprising:

a management core configured to manage the allocation of processing tasks in the system;

a plurality of processing cores configured to execute instructions for performing processing tasks;

at least one memory resource, wherein the at least one shared resource is connected to each of the processing cores;

a contention assessment module configured to monitor the amount of contention in the system; and

a processing suspension module configured to cause the suspension of processing on at least one of the processing cores;

wherein the method comprises:

determining a criticality level of each task to be performed;

allocating each task to a respective processing core of the plurality of processing cores based on the determined criticality level;

assigning a contention threshold to at least one processing core of the plurality of processing cores;

monitoring the amount of contention caused by the at least one processing core that has been assigned a contention threshold; and

if the amount of contention caused by the at least one processing core that has been assigned a contention threshold reaches the assigned contention threshold, suspending processing on that processing core.

In an embodiment, the method may further comprise: after a time interval has elapsed, resuming processing on the at least one processing core that was previously suspended.

In an embodiment, determining a criticality level of each task to be performed may comprise determining a Design Assurance Level, DAL, of each task.

In an embodiment, each processing core may be associated with a particular DAL and tasks are allocated to the respective processing core having the associated DAL.

In an embodiment, assigning a contention threshold to at least one processing core may comprise assigning a respective contention threshold to all but one of the plurality of processing cores, wherein the assigned contention thresholds are all different from one another and wherein the lower the assigned contention threshold the lower the determined criticality level of the tasks allocated to the respective processing core.

In the above embodiment, the contention thresholds may be assigned based on the chain rule:

$$threshold_A > threshold_B > threshold_C > threshold_N$$

where A, B, C, N represent cores in descending order of criticality.

A second aspect of the present disclosure relates to a multi-core processing system comprising:

a management core configured to manage the allocation of processing tasks in the system;

a plurality of processing cores configured to execute instructions for performing processing tasks;

at least one shared resource, wherein the at least one shared resource is connected to each of the processing cores;

a contention assessment module configured to monitor the amount of contention in the system; and

a processing suspension module configured to cause the suspension of processing on at least one of the processing cores;

wherein the system is configured to:

determine a criticality level of each task to be performed;

allocate each task to a respective processing core of the plurality of processing cores based on the determined criticality level;

assign a contention threshold to at least one processing core of the plurality of processing cores;

monitor the amount of contention caused by the at least one processing core that has been assigned a contention threshold; and

if the amount of contention caused by the at least one processing core that has been assigned a contention threshold reaches the assigned contention threshold, suspend processing on that processing core.

In an embodiment, the contention assessment module is a hardware-specific module.

In an embodiment, the processing suspension module is a hardware-specific module.

In an embodiment, the memory resource is connected to each of the processing cores via a crossbar connection.

In an embodiment, the multi-core processing system is further configured to resume processing on the processing core that was previously suspended after a time interval has elapsed.

In an embodiment, wherein determining a criticality level of each task to be performed comprises determining a Design Assurance Level, DAL, of each task.

In an embodiment, each processing core is associated with a particular DAL and tasks are allocated to the respective processing core having the associated DAL.

In an embodiment, assigning a contention threshold to at least one processing core comprises assigning a respective contention threshold to all but one of the plurality of processing cores, wherein the assigned contention thresholds are all different from one another and wherein the lower the assigned contention threshold the lower the determined criticality level of the tasks allocated to the respective processing core.

In the above embodiment, the contention thresholds are assigned based on the chain rule:

$$threshold_A > threshold_B > threshold_C > threshold_N$$

where A, B, C, N represent cores in descending order of criticality.

Features of any aspect or embodiment described herein may, wherever appropriate, be applied to any other aspect or embodiment described herein. Where reference is made to different embodiments or sets of embodiments, it should be understood that these are not necessarily distinct but may overlap.

BRIEF DESCRIPTION OF THE DRAWINGS

Certain embodiments of the present disclosure will now be described in greater detail by way of example only and with reference to the accompanying drawings, in which:

Figure 1 schematically shows a method according to an embodiment

Figure 2 schematically shows a multi-core processing system according to an embodiment;

Figure 3 schematically shows a scheduling framework according to an embodiment; and

Figure 4 schematically shows a scheduling framework according to an embodiment.

DETAILED DESCRIPTION

As mentioned above, contention occurs when two or more primaries (e.g. processing cores, DMAs, accelerators, or other kind of agent that perform requests and transactions in the architecture) attempt to access a shared resource (e.g. a shared memory resource) having a single access channel (interference channel) at the same time. Since only one of the primaries can have access to the shared resource at a time owing to the single access channel, the others have to wait. This leads to an increase in the worst-case execution time (WCET) and also hinders time determinism in the system.

This behaviour poses a challenge for the deployment of highly critical applications (e.g. those assigned a DAL-A/B design assurance level as stated in RTCA DO-178C / EUROCAE ED-12C: Software Considerations in Airborne Systems and Equipment Certification) in multi-core processing systems as it makes very difficult to enforce a realistic WCET. The variability and non-determinism make it very difficult to certify multi-core processing systems for safety-critical and mixed-critical applications.

Some known systems manage software applications using the known ARINC-653 framework in order to reduce or avoid contention within the system. The ARINC-653 standard has become the de-facto scheduling scheme to enforce determinism on multi-core processing systems by imposing pre-defined static resource and time partitions allocations. The strict and rigid partitioning scheme intends to provide means for spatial and time determinism. This type of scheduling is widely used in avionics and other aerospace systems. However, this approach has shown a limited effect on controlling non-deterministic scenarios at the cost of reducing performance.

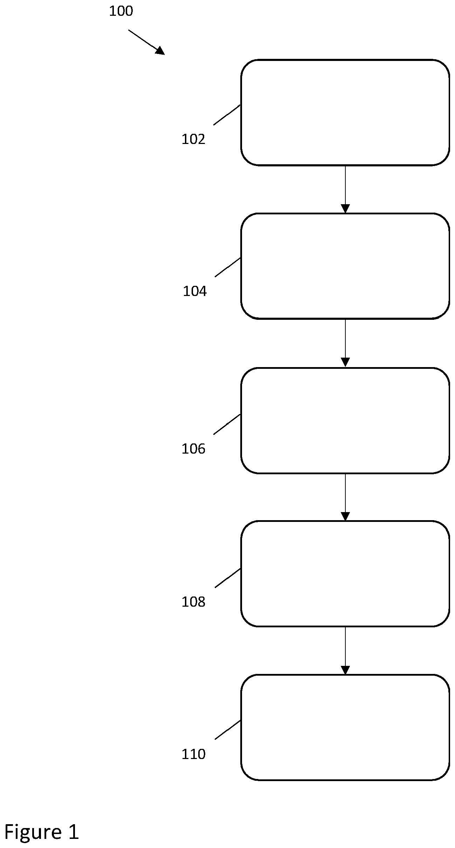

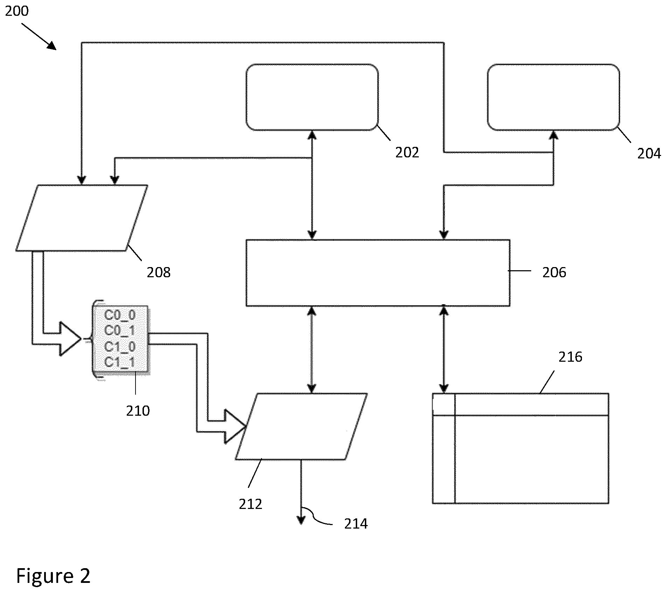

Figures 1 and 2 respectively illustrate an exemplary method 100 and system 200 according to an embodiment. The method 100 for managing software application tasks being performed in a multi-core system comprises: determining 102 a criticality level of each task to be performed; allocating 104 each task to a respective processing core 202, 204 of a plurality of processing cores based on the determined criticality level; assigning 106 a contention threshold (quota) to at least one processing core 202, 204 of the plurality of processing cores; monitoring 108 the amount of contention caused by the at least one processing core 202, 204 that has been assigned a contention threshold; and, if the amount of contention caused by the at least one processing core 202, 204 that has been assigned a contention threshold reaches the assigned contention threshold, suspending 110 processing on that processing core 202, 204.

The method 100 makes it possible to overcome the problems of the prior art, in particular enabling the assessment and limitation of contention and establishing specific policies to ensure bounded WCET for every task according to its criticality level. In addition, the method 100 makes it possible to design a more flexible scheduler than the classic ARINC-653 to accommodate mixed-criticality applications with different periodicities and priorities.

The system 200 comprises a management core (not shown) and a plurality of processing cores 202, 204. The plurality of processing cores 202, 204 are configured to execute instructions for performing processing tasks for software applications. Although only two processing cores are illustrated in figure 2, it will be appreciated that a multi-core processing system for use with the present invention may comprise more than two processing cores. In one embodiment, a multi-core processing system comprises four processing cores.

A system bus 206 connects each of the processing cores 202, 204 to a shared resource 216. The shared resource 216 may be any resource which needs to be accessed by multiple primaries in the system. For example, the shared resource 216 may be a memory resource. The system bus 206 may be connected to the shared resource 216 and the processing cores 202, 204 using any suitable and desired configuration. In the system 200 illustrated in figure 2, the system bus 206 uses a crossbar connection.

The system 200 further comprises a contention assessment module 208 configured to monitor the amount of contention in the system. The contention assessment module 208 may be implemented in any suitable and desired manner. The contention assessment module 208 may be a hardware-specific module. Contention occurs in the system when two primaries (e.g. two processing cores) simultaneously attempt to access a shared resource having only a single access channel. By monitoring (recording) the amount of contention, it is possible to use this information to trigger a signal 210 when a given threshold is reached.

The signal 210 is received by a processing suspension module 212 configured to cause the suspension of processing on at least one of the processing cores 202, 204 when a respective contention threshold is reached. The procession suspension module 213 is configured to monitor the amount of contention in the system. Monitoring the amount of contention in the system may be done in any suitable and desired manner. For example, the number of times contention is caused may be recorded by incrementing a counter each time contention is detected. Alternatively, monitoring the amount of contention in the system may comprise monitoring the delay caused by contention in the system. In an embodiment, monitoring the amount of contention in the system comprises counting the number of cycles of delay caused by each primary in the system. In this case, the contention threshold is expressed as a number of cycles, for example 2000 or 5000 cycles.

In the illustrated system 200, whenever there is contention in the system 200, the contention assessment module 208 outputs a signal 210 which indicates the source of the contention and the location of the contention. That is, the signal 210 may indicate that the contention occurred in processing core 202 and was caused by processing core 202 (C0_0), that the contention occurred in processing core 202 and was caused by processing core 204 (C0_1), that the contention occurred in processing core 204 and was caused by processing core 202 (C1_0), or that the contention occurred in processing core 204 and was caused by processing core 204 (C1_1). In the event that monitoring the amount of the contention in the system comprises monitoring the delay caused by contention in the system, the contention assessment module also indicates how many cycles of delay are caused by the detected contention. However the contention is measured, when the given contention threshold is reached, the processing suspension module 212 sends an interrupt signal 214 to suspend processing on at least one of the processing cores 202, 204.

In an embodiment, the contention assessment module 208 is a hardware-specific module. In another embodiment, the contention assessment module 208 is implemented in software. The contention assessment module 208 may be configured to derive contention metrics using a performance monitor counter to characterise the behaviour of the system 200. In this case, events flagged by the performance monitor counter may be assigned different weights according to the contention produced in the system. The weights can (and should) be obtained by analytical or experimental analysis.

In an embodiment, the processing suspension module 212 is a hardware-specific module. In another embodiment, the processing suspension module 212 is implemented in software.

In an embodiment, the method further comprises resuming processing on the at least one processing core 202, 204 that was previously suspended after a time interval has elapsed. The processing schedule may be divided into periodic intervals. The intervals may be referred to as "timeslices". At the end of each timeslice, the contention monitoring is reset (e.g. one or more counters are reset) and processing on one or more processing cores that have been suspended is resumed before the start of the next timeslice. The timeslices may be set to any suitable and desired length of time. In an embodiment, each timeslice is 1 ms.

In an embodiment, determining a criticality level of each task to be performed comprises determining a Design Assurance Level (DAL) of each task. Avionics standard DO-178C uses the fundamental concept of the DAL, which defines the amount of rigour that should be applied by the design assurance process based on the contribution to aircraft safety. The higher the DAL, the more severe the consequences to the aircraft should the software fail or malfunction. As a result, the higher the DAL, the more activities and objectives that must be performed and met as part of the design assurance process.

Design Assurance Level A (DAL-A) is the highest level of design assurance that can be applied to airborne software and is applied when failure or malfunction of the software could contribute to a catastrophic failure of the aircraft. The activities and objectives that must be met through the Design Assurance process gradually decrease with each level alphabetically until DAL-E, which has no objectives as there is no consequence to aircraft safety should such software fail or malfunction.

In an embodiment, each processing core is associated with a particular DAL. A criticality level is determined for each task and the tasks are then allocated based on the determined criticality level to the respective processing core having the associated DAL. In an embodiment, the criticality level of processing tasks may be determined to be one of: high, medium, and low. In other words, in a system having three processing cores respectively associated with DAL-A, DAL-C and DAL-E, tasks which are determined to have the highest criticality level are assigned to the core associated with DAL-A, tasks which are determined to have a medium criticality level are assigned to the core associated with DAL-C, and tasks which are determined to have a low criticality level are assigned to the core associated with DAL-E. In an embodiment, tasks are assigned a specific DAL and are then allocated to the processing core with the same associated level. In the event that a task is assigned an assurance level that does not match any of the assurance levels associated with the processing cores, the task is allocated to the processing core associated with the next highest assurance level. For example, if a task was determined to be at DAL-C but there was no processing core associated with this level, the task would be allocated to the core associated with DAL-B (or DAL-A, if this was the only available higher assurance level) rather than being allocated to a processing having a lower assurance level (e.g. DAL-D or DAL-E). In this way, it can be ensured that tasks are performed within constraints that are equal to or better than the constraints of the assurance level which they have been designated.

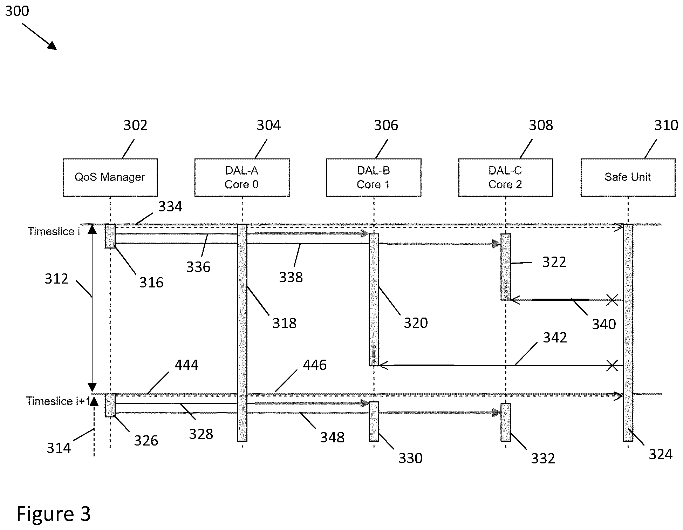

Figure 3 schematically shows a scheduling framework 300 for use with the present invention. The scheduling framework 300 is configured for use with a multi-core processing system having four cores. It will be appreciated, however, that in other embodiments a different number of cores may be provided. In figure 3, time is indicated vertically from top to bottom.

A management core 302 is configured to manage the allocation of processing tasks in the system. Three processing cores 304, 306, 308 are configured to execute instructions for performing processing tasks. Each of the processing cores 304, 306, 308 has been assigned a DAL. The zeroth processing core 304 is assigned DAL-A, the first processing core 306 is assigned DAL-B and the second processing core 306 is assigned DAL-C. It will be appreciated that other DALs may be assigned to the processing cores. By associating each processing core with a particular assurance level (DAL), it is possible for different criticality applications to be deployed in the same system.

A set of tasks that belong to one or several applications with a common criticality level are allocated to a unique processing core. In this case, tasks having a criticality level of DAL-A are allocated to the processing core 304; tasks at level DAL-B are allocated to the processing core 306 and tasks at level DAL-C are allocated to the processing core 308. The aggregated WCETs of all tasks allocated to a respective processing core will prescribe the execution time for the period. All of the applications allocated to the same core have the same period.

Applications 316, 318, 320, 322, 324, 326, 328, 330, 332 are released at the beginning of their period, starting in the "RUNNING" state. As can be seen in figure 3, the start of an application period does not necessarily coincide with the start of a timeslice 312, 314.

During execution of the application tasks, the processing suspension module 310 (Safe Unit) may raise an interrupt 340, 342 when a contention threshold is reached for a particular processing core 306, 308. In response to the interrupt 340, 342, processing is suspended on the processing core 306, 308 which reached its contention threshold. That processing core 306, 308 remains in the SUSPENDED state until the management core 302 resets the contention monitoring at the start of the next timeslice 314. When the contention monitoring is reset, the tasks 330, 332 on the previously suspended cores 306, 308 are resumed. If an application successfully finishes all of its tasks on time, it will become "COMPLETED" and will go idle until its next period. On the other hand, if the application does not meet the deadline, because it was delayed by contenders, it enters in a "FAILED" state and its execution is terminated by the scheduler.

It will be seen in figure 3 that the processing core 304 with the highest criticality (DAL-A) does not receive any interrupts from the processing suspension module 310. The processing core 304 is not assigned a contention threshold as it processes the highest criticality tasks whose failure would cause catastrophic condition to arise. The remaining processing cores 306, 308 are, however, each assigned a contention threshold.

The contention threshold assigned to the processing core 308 associated with the lowest criticality (DAL-C, in this case) is lower than the contention threshold assigned to the other processing core 306. In other words, the lowest-criticality processing core 308 is allowed to cause less contention before being suspended, while the other processing core 306 may cause more contention before being suspended. In this way, it can be ensured that higher-criticality tasks are prioritised.

A chained-rule configuration is used to ensure the hierarchical behaviour of the core suspension. In the most general sense, the contention threshold chain rule can be expressed as:

$$threshold_A > threshold_B > threshold_C > threshold_N$$

where A, B, C, N represent cores in descending order of criticality.

For DO-178C assurance levels (DALs), the hierarchical contention thresholds should fulfil the following constraint:

$$threshold_{dalb} > threshold_{dalc} > threshold_{dald} > threshold_{dale}$$

which states that the highest priority core (DAL-A) won't have any threshold, as it won't be suspended for any reason. On the other hand, the rest of the processing cores with lower criticality levels will be assigned a range of contention thresholds depending on their criticality level.

As discussed above, contention thresholds may be specified in number of cycles, representing the number of cycles that a processing core has delayed a contending one. It will be appreciated that the particular contention thresholds can be set to any suitable and desired values based on the specific applications being processed. In an embodiment, contention thresholds of respective processing cores may be set to 2000 and 5000 cycles.

The contention threshold may depend on the grace time that an application has to complete its set of tasks with respect to its deadline. For instance, if an application has a WCET of 8ms (measured in isolation) and a deadline or period of 10ms, this will allow 2ms of grace time. This overprovisioning time should be scaled based on the timeslice granularity of the system (e.g. Timeslice period = 1ms) as stated by the following rule:

$$threshold_i \leq (WCET_i^{solo} - deadline_i)/\lceil deadline_i/q\rceil$$

where $WCET_i^{solo}$ represents the worst-case execution time measured in isolation (i.e. with no contenders) and q is the number of timeslices.

The numerator of the right-hand side computes the grace time and the denominator computes the ceiling of the number of timeslices that a core i will have in its own period. This will provide a rough upper bound for the quota on that core.

In addition, it should be considered that the WCET under contention conditions will depend on other aspects, such as:

$$WCET_i^{parallel} = WCET_i^{solo} + contention_i^{over\ core} + suspended\_cycles_i$$

which is based on the execution time in isolation, the cycles that a core has been contended (specified by the aggregated contention assessment signals over core i) and the cycles that the core has been suspended if it exceeded its contention threshold.

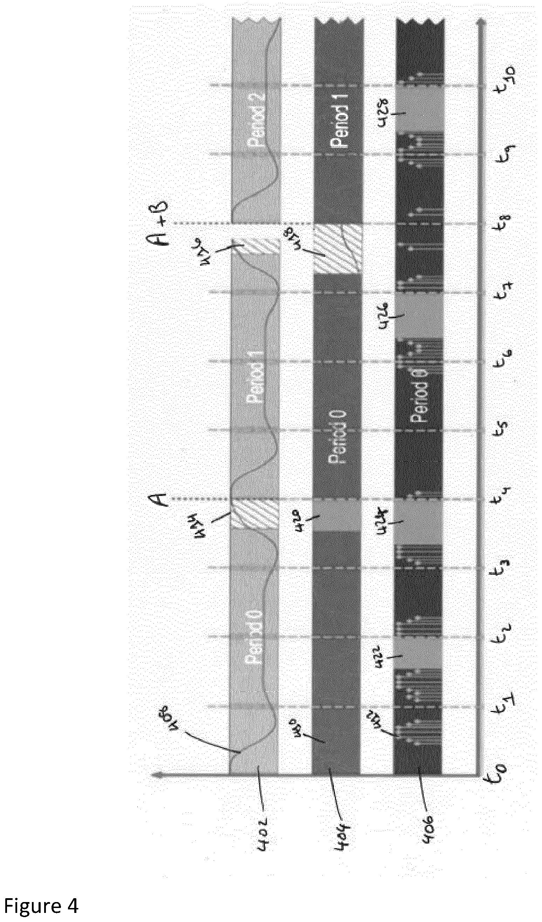

Figure 4 illustrates the flexible scheduling that is enabled in accordance with the invention. As shown in the figure, the proposed systems and methods allow processing cores to run at different frequencies (periods), avoiding the common rigid and strict scheduling proposed in ARINC-653 schemes, where Major Frames are synchronized across cores and many idle gaps are produced. In particular, the proposed infrastructure makes it possible to generate asynchronous partitions (as opposed to the fully synchronized minor/major frames in ARINC-653 schemes, for example). The use of asynchronous partitions makes it possible to reduce or eliminate idle gaps which occur in rigid minor/major frames. As a result, the present invention makes it possible to increase throughput.

Figure 4 shows the scheduling for three processing cores 402, 404, 406 in accordance with the invention. In figure 4, time is indicated horizontally from left to right and successive instances $t_0$ to $t_{10}$ are indicated along the horizontal axis.

Each processing core 402, 404, 406 is associated with a different assurance level. The first processing core 402 is associated with DAL-A, the second processing core 404 is associated with DAL-B, and the third processing core 406 is associated with DAL-E. As a result, different processing constraints are placed on each of the three cores 402, 404, 406, with the most stringent requirements being placed on the first processing core 402 and the least stringent requirements being placed on the third processing core 406.

Unlike in the known ARINC-653 scheme, there does not need to be a common period for all cores when using the systems and methods of the invention. As can be seen in figure 4, each of the processing cores has a different number of periods (that is to say, each core may run at a different frequency). In the time interval illustrated in figure 4, the third processing core 406 has only one period (i.e. from $t_0$ extending to beyond $t_{10}$), which is indicated as period 0. In contrast, the second processing core 404 has two periods: period 0 (from $t_0$ to $t_8$) and period 1 (from $t_8$ extending to beyond $t_{10}$); and the first processing core 402 has three periods: period 0 (from $t_0$ to $t_4$), period 1 (from $t_4$ to $t_8$) and period 2 (from $t_8$ extending to beyond $t_{10}$).

The dotted lines at $t_4$ and $t_8$ indicate the deadlines specified by the DAL assurance levels. The first processing core 402, which has an assurance level of DAL-A, has deadlines at both $t_4$ and $t_8$, while the second processing core 404, which has a lower assurance level of DAL-B, only has a deadline at $t_8$. If processing of a particular task by a particular processing core has not been completed by the time the specified deadline for the processing core in question has been reached, that task is reset in accordance with the DAL assurance levels. It will of course be appreciated that other assurance levels may alternatively be used and these may be set as appropriate to achieve a desired outcome. As mentioned above, the assurance level of the third processing core 404 is such that no processing deadlines are imposed.

The contention caused by each of the processing cores 402, 404, 406 is monitored. In an embodiment, the contention caused by each of the processing cores 402, 404, 406 is continuously monitored. The amount of contention 408, 410, 412 caused by each processing core 402, 404, 406 illustrated in figure 4 varies over time. The amount of contention 408, 410, 412 may be measured as the number of cycles of delay caused by each processing core 402, 404, 406.

The first processing core 402 has no contention threshold assigned to it such that processing on that processing core 402 will not be interrupted as a result of contention in the system. It will be appreciated that, in some embodiments, the amount of contention caused by one or more processing cores that do not have a contention threshold may not be monitored. In contrast to the first processing core 402, the second 404 and third 406 processing cores are each assigned a respective contention threshold. If the respective contention threshold is exceeded by one of the second 404 and third 406 processing cores, that processing core is suspended. In other words, the amount of contention 410, 412 caused by the second 404 and third 406 processing cores is monitored cumulatively and compared to the respective contention threshold for each processing core 404, 406. When the contention threshold for a particular processing core 404, 406 is reached, processing on that processing core is suspended (interrupted).

The processing cores 404, 406 may be interrupted using any suitable and desired means. In an embodiment, a management core (e.g. as described above in connection with figures 2 and 3) sends an inter-process interrupt to cause processing on the processing core in question to be suspended.

The contention thresholds are periodically reset such that processing on suspended cores can be resumed. Resetting of the contention threshold may be done in any suitable and desired manner. In the depicted embodiment, a signal is periodically sent (for example, from a management core of the system) to reset the monitoring of the contention thresholds assigned to each of the second 404 and third 406 processing cores. For example, the sent signal may cause a counter which records the amount of contention caused by a respective processing core to be reset. The signals are sent at intervals $t_1, t_2, t_3, ..., t_{10}$, as indicated by dashed lines in figure 4. The period between successive reset signals is referred to as a timeslice. At the end of each timeslice, processing on processing cores which were suspended during that timeslice is resumed.

The timeslices may be of any suitable and desired length of time. In an embodiment, each timeslice is 1 ms. As explained in more detail above, the timeslice length may be used in conjunction with the worst-case execution time(s) of one or more applications to determine the contention thresholds for each processing core 404, 406. The contention thresholds may be defined as a certain number of cycles of delay that may be caused by the respective processing core. The contention thresholds are set such that even in the event of delays caused by competing processing cores, the constraints required by the various assurance levels can still be met.

The operations of the processing cores 402, 404, 406 will now be described in more detail. In the embodiment depicted in figure 4, all three processing cores 402, 404, 406 are operating at instance $t_0$. Tasks having the highest assurance level (e.g. DAL-A) are allocated to the first processing core 402 while tasks having the lowest assurance level (e.g. DAL-E) are allocated to the third processing core 406. The allocation of tasks is managed by a management core of the system.

The amount of contention caused by each processing core 402, 404, 406 is monitored (as indicated by plots 408, 410 and 412). As mentioned above, the second 404 and third 406 processing cores each have a respective contention threshold assigned to them. The contention threshold for the second processing core 404 is higher than the contention threshold for the third processing core 406. In other words, the second processing core 404 is permitted to cause more delay in the system before processing on that core is interrupted. As an example, the contention threshold for the second processing core 404 may be set to 5000 cycles of delay, while the contention threshold for the third processing core 406 may be set to 2000 cycles of delay.

At instance $t_1$, a signal is sent from the management core to each of the processing cores 402, 404, 406. The signal causes the contention monitoring for each processing core to be reset (e.g. a respective counter monitoring cumulative contention for each processing core is reset). Processing on each of the processing cores 402, 404, 406 continues.

Between instance $t_1$ and $t_2$, the third processing core 406 reaches its contention threshold and an inter-process interrupt is sent from the management core to cause processing on the third processing core 406 to be suspended. The period of time for which the third processing core 406 is suspended is indicated by reference numeral 422.

At instance $t_2$, a signal is sent from the management core to each of the processing cores 402, 404, 406 to cause the monitoring of the contention to be reset. In addition, the third processing core 406 is caused to resume processing. It will be appreciated that the signal which causes the monitoring to be reset may also cause the suspension 422 of the third processing core 406 to cease (i.e. for processing to be resumed on the third processing core 406). Alternatively, one or more separate signals may be sent to cause processing on the third processing core 406 to be resumed.

In the following timeslice, between instances $t_2$ and $t_3$, all processing cores 402, 404, 406 continue to operate without suspension. Between $t_3$ and $t_4$, the third processing core 406 reaches its contention threshold again and processing on that processing core 406 is suspended 424. Some time later in the same timeslice, the second processing core 404 also reaches its contention threshold and processing on that processing core 404 is suspended 420.

The effect of the contention in the system causes some delay. The delay caused to the processing on the first processing core 402 is indicated by the hatched area 414. It can be seen that even though there is some delay, the processing of the task assigned to the first processing core 402 is still completed by the required deadline (indicated by dotted line A) for the assurance level associated with the first processing core 402.

At $t_4$, reset/resume signal(s) are sent to all processing cores 402, 404, 406 such that all three processing cores are in operation at the start of the next timeslice. The first processing core 402 is now in its second period, while the remaining processing cores 404, 406 are still in their respective first periods. Processing continues on all three processing cores 402, 404, 406 as has been described until the timeslice between $t_6$ and $t_7$, in which the third processing core 406 is again suspended 426. At $t_7$, processing on the third processing core 406 is again resumed in the same manner as has been described.

Instance $t_8$ marks the end of the second period for the first processing core 402 and the first period for the second processing core 404. It can be seen that the delay 416, 418 caused by the contention in the system for each of the first 402 and second 404 processing cores remains within bounds (as indicated by dotted line A + B) such that the requirements of the respective assurance levels for the first 402 and second 404 processing cores are met. Processing of the task allocated to the first processing core 402 is completed before the end of the timeslice. Processing of the next task then begins at $t_8$ (i.e. at the start of the third period for the first processing core 402).

The asynchronous processing of tasks across the three processing cores 402, 404, 406 continues and the amount of contention caused by each processing core 402, 404, 406 continues to be monitored. The third processing core 406 again reaches its contention threshold and is suspended 428 during the timeslice between $t_9$ and $t_{10}$. The asynchronous processing continues until all allocated tasks have been completed.

By monitoring contention thresholds for each processing core and suspending the processing on a processing core which reaches its assigned contention threshold, the present invention allows asynchronous multi-core processing of software application tasks. As a result, idle time may be reduced and throughput increased.

It will be appreciated by those skilled in the art that the invention has been illustrated by describing one or more specific embodiments thereof, but is not limited to these embodiments; many variations and modifications are possible, within the scope of the accompanying claims.

Although the foregoing description refers to the use of the methods and systems disclosed herein in the context of avionics applications, it will be appreciated that they may also find use in land- and/or water-based vehicles as well as in any other situation that calls for the real-time management of software application tasks with mixed criticalities.

## Claims

1. A method for managing software application tasks being performed in a multi-core processing system, the system comprising:

   a management core configured to manage the allocation of processing tasks in the system;
   a plurality of processing cores configured to execute instructions for performing processing tasks;
   at least one shared resource, wherein the at least one shared resource is connected to each of the processing cores;
   a contention assessment module configured to monitor the amount of contention in the system; and
   a processing suspension module configured to cause the suspension of processing on at least one of the processing cores;

   wherein the method comprises:

   determining a criticality level of each task to be performed;
   allocating each task to a respective processing core of the plurality of processing cores based on the determined criticality level;
   assigning a contention threshold to at least one processing core of the plurality of processing cores;
   monitoring the amount of contention caused by the at least one processing core that has been assigned a contention threshold; and
   if the amount of contention caused by the at least one processing core that has been assigned a contention threshold reaches the assigned contention threshold, suspending processing on that processing core.

2. The method of claim 1, further comprising:
   after a time interval has elapsed, resuming processing on the at least one processing core that was previously suspended.

3. The method of any preceding claim, wherein determining a criticality level of each task to be performed comprises determining a Design Assurance Level, DAL, of each task.

4. The method of claim 3, wherein each processing core is associated with a particular DAL and tasks are allocated to the respective processing core having the associated DAL.

5. The method of any preceding claim, wherein assigning a contention threshold to at least one processing core comprises assigning a respective contention threshold to all but one of the plurality of processing cores, wherein the assigned contention thresholds are all different from one another and wherein the lower the assigned contention threshold the lower the determined criticality level of the tasks allocated to the respective processing core.

6. The method of claim 5, wherein the contention thresholds are assigned based on the chain rule:

$$threshold_A > threshold_B > threshold_C > threshold_N$$

where A, B, C, N represent cores in descending order of criticality.

7. A multi-core processing system comprising:

> a management core configured to manage the allocation of processing tasks in the system;
> a plurality of processing cores configured to execute instructions for performing processing tasks;
> at least one shared resource, wherein the at least one shared resource is connected to each of the processing cores;
> a contention assessment module configured to monitor the amount of contention in the system; and
> a processing suspension module configured to cause the suspension of processing on at least one of the processing cores;

> wherein the system is configured to:

> determine a criticality level of each task to be performed;
> allocate each task to a respective processing core of the plurality of processing cores based on the determined criticality level;
> assign a contention threshold to at least one processing core of the plurality of processing cores;
> monitor the amount of contention caused by the at least one processing core that has been assigned a contention threshold; and
> if the amount of contention caused by the at least one processing core that has been assigned a contention threshold reaches the assigned contention threshold, suspend processing on that processing core.

8. The system of claim 7, wherein the contention assessment module is a hardware-specific module.

9. The system of claim 7 or 8, wherein the processing suspension module is a hardware-specific module.

10. The system of any of claims 7 to 9, wherein the shared resource is connected to each of the processing cores via a crossbar connection.

11. The system of any of claims 7 to 10, wherein the multi-core processing system is further configured to resume processing on the processing core that was previously suspended after a time interval has elapsed.

12. The system of any of claims 7 to 11, wherein determining a criticality level of each task to be performed comprises determining a Design Assurance Level, DAL, of each task.

13. The system of any of claims 7 to 12, wherein each processing core is associated with a particular DAL and tasks are allocated to the respective processing core having the associated DAL.

14. The system of any of claims 7 to 13, wherein assigning a contention threshold to at least one processing core comprises assigning a respective contention threshold to all but one of the plurality of processing cores, wherein the assigned contention thresholds are all different from one another and wherein the lower the assigned contention threshold the lower the determined criticality level of the tasks allocated to the respective processing core.

15. The method of claim 14, wherein the contention thresholds are assigned based on the chain rule:

$$threshold_A > threshold_B > threshold_C > threshold_N$$

where A, B, C, N represent cores in descending order of criticality.

Figure 1

Figure 2

Figure 3

Figure 4

Europäisches
Patentamt

European
Patent Office

Office européen
des brevets

# EUROPEAN SEARCH REPORT

Application Number

EP 23 17 5948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOWOTSCH JAN ET AL: "Multi-core Interference-Sensitive WCET Analysis Leveraging Runtime Resource Capacity Enforcement", 2014 26TH EUROMICRO CONFERENCE ON REAL-TIME SYSTEMS, IEEE, 8 July 2014 (2014-07-08), pages 109-118, XP032665438, DOI: 10.1109/ECRTS.2014.20 [retrieved on 2014-10-21] * abstract * * page 111, right-hand column * * page 112, left-hand column * * page 114, left-hand column * * page 114, right-hand column * ----- | 1-15 | INV. G06F9/50 G06F9/48 |
| A | Lofwenmark Andreas ET AL: "Understanding Shared Memory Bank Access Interference in Multi-Core Avionics", , 1 January 2016 (2016-01-01), XP093019562, DOI: 10.4230/OASIcs.WCET.2016.12 Retrieved from the Internet: URL:https://drops.dagstuhl.de/opus/volltexte/2016/6905/pdf/OASIcs-WCET-2016-12.pdf [retrieved on 2023-01-31] * abstract * * page 12:2 * * page 12:5 * * page 12:6 * * page 12:8 * ----- | 1-15 | TECHNICAL FIELDS SEARCHED (IPC) G06F |

-/--

The present search report has been drawn up for all claims

| Place of search | Date of completion of the search | Examiner |
|---|---|---|
| The Hague | 28 September 2023 | Suzic, Bojan |

Europäisches
Patentamt

European
Patent Office

Office européen
des brevets

# EUROPEAN SEARCH REPORT

Application Number

EP 23 17 5948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LOFWENMARK ANDREAS ET AL: "Challenges in Future Avionic Systems on Multi-Core Platforms", 2014 IEEE INTERNATIONAL SYMPOSIUM ON SOFTWARE RELIABILITY ENGINEERING WORKSHOPS, IEEE, 3 November 2014 (2014-11-03), pages 115-119, XP032703983, DOI: 10.1109/ISSREW.2014.70 [retrieved on 2014-12-12] * page 115, right-hand column * * page 118, left-hand column * ----- | 1-15 | |
| A | GIANNOPOULOU GEORGIA ET AL: "Scheduling of mixed-criticality applications on resource-sharing multicore systems", 2013 PROCEEDINGS OF THE INTERNATIONAL CONFERENCE ON EMBEDDED SOFTWARE (EMSOFT), IEEE, 29 September 2013 (2013-09-29), pages 1-15, XP032524797, DOI: 10.1109/EMSOFT.2013.6658595 [retrieved on 2013-11-07] * abstract * * page 1, left-hand column * * page 11, left-hand column * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 28 September 2023 | Suzic, Bojan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2